# EUROPÄISCHE PATENTSCHRIFT

(11) **EP 1 180 248 B1**
(45) Veröffentlichungstag und Bekanntmachung des Hinweises auf die Patenterteilung: **02.01.2003**
(21) Anmeldenummer: 00919086.9
(22) Anmeldetag: 26.04.2000
(51) Int. Cl.: G02B 6/38

(54) **VERFAHREN ZUM BEFESTIGEN EINER FERRULE AN EINEM LICHTWELLENLEITER**
METHOD OF FIXING A FERRULE TO AN OPTICAL WAVEGUIDE
PROCEDE DE FIXATION D'UNE FERRULE SUR UN GUIDE OPTIQUE

(30) Priorität: 28.04.1999 DE 19919428
(43) Veröffentlichungstag der Anmeldung: 20.02.2002
(73) Patentinhaber: TYCO Electronics Logistics AG, 9323 Steinach (CH)
(72) Erfinder: KRAH, Thorsten, D-67122 Altrip (DE); BAUER, Jürgen, D-85049 Ingolstadt (DE); LÖFFELHOLZ, Stefan, D-64653 Lorsch (DE)
(74) Vertreter: Heinz-Schäfer, Marion
(86) Internationale Anmeldenummer: IB0000521
(87) Internationale Veröffentlichungsnummer: WO00067056

(56) Entgegenhaltungen:
- DE-A- 2 801 603
- DE-C- 19 529 527
- US-A- 4 859 827
- US-A- 5 291 570
- PATENT ABSTRACTS OF JAPAN vol. 012, no. 396 (P-774), 21. Oktober 1988 (1988-10-21) & JP 63 137202 A (FUJITSU LTD), 9. Juni 1988 (1988-06-09)
- PATENT ABSTRACTS OF JAPAN vol. 013, no. 007 (P-810), 10. Januar 1989 (1989-01-10) & JP 63 216010 A (FUJIKURA LTD), 8. September 1988 (1988-09-08)

## Beschreibung

Die vorliegende Erfindung betrifft eine Ferrule für einen Lichtwellenleiter und ein Verfahren zum Befestigen einer Ferrule an einem Lichtwellenleiter.

Bei der Kopplung von elektrooptischen Sendern, wie zum Beispiel LED's und Laserdioden und elektrooptischen Empfängern, wie zum Beispiel Photodioden und Phototransistoren, mittels einer lichtleitenden Faser oder bei der optischen Verbindung von zwei getrennten Lichtwellenleitern (z.B. aus Kunststoff) miteinander, ergibt sich das Problem, daß die Stirnflächen der lichtleitenden Fasern zu den korrespondierenden Sendeoder Empfangsflächen sehr genau in Position gebracht und gehalten werden müssen. Dabei müssen die optischen Achsen präzise zur Deckung gebracht werden und sehr nahe aneinander anschließen, d.h. sie müssen sowohl in radialer als auch in axialer Richtung exakt positioniert werden.

Um eine einwandfreie Ankopplung eines Lichtwellenleiters zu einem Sender oder zu einem Empfänger oder eine einwandfreie Kopplung Faser/Faser zu gewährleisten, wird bei den bekannten optischen Steckverbindungen das Ende des Lichtwellenleiters mit einem Röhrchen, einer sogenannten Ferrule (auch Insert genannt) konfektioniert.

Die Befestigung der Ferrule auf bzw. an dem Lichtwellenleiter muß zugfest erfolgen, ohne dabei den Lichtwellenleiter zu beschädigen oder gar seine optischen Eigenschaften zu beeinflussen.

Bekannte Befestigungen an einem Lichtwellenleiter stellen zu diesem eine Verbindung her, indem beispielsweise eine Crimpverbindung an den Lichtwellenleiter angebracht wird. Hierbei besteht jedoch die Gefahr, dass der Lichtwellenleiter beschädigt wird oder die optischen Eigenschaften negativ beeinflusst werden.

Die Verschweissung einer Ferrule mittels Wärme oder Ultraschall ist auch bekannt (siehe JP 63 137 202 A und DE 2 801 603 A).

Demgegenüber ist es die Aufgabe der vorliegenden Erfindung, eine Ferrule für einen Lichtwellenleiter bzw. ein Verfahren zum Befestigen einer Ferrule an einem Lichtwellenleiter zu schaffen, wobei eine sichere Befestigung der Ferrule an dem Lichtwellenleiter, auch bei einer Verwendung in einem Kraftfahrzeug, für hohe Ausziehkräfte gegeben ist. Zudem sollte eine optische Dämpfung möglichst nicht auftreten und die Fertigung mittels des Verfahrens kurze Taktzeiten erlauben und geringe Kosten verursachen.

Diese Aufgabe wird durch eine Ferrule mit einem Lichtwellenleiter gemäss dem Patentanspruch 1 gelöst bzw. durch ein Verfahren gemäss Patentanspruch 8 gelöst.

Demnach zeichnet sich eine erfindungsgemässe Ferrule für einen Lichtwellenleiter durch die Merkmale des Patentanspruches 1 aus.

Darüber hinaus umfasst das erfindungsgemässe Verfahren zum Befestigen einer Ferrule an einem Lichtwellenleiter Schritte gemäss Patentanspruch 8.

Vorteilhafte Weiterbildungen der Ferrule und des Verfahrens sind jeweils in den Unteransprüchen angeführt.

In Übereinstimmung mit der vorliegenden Erfindung wird die Ferrule, die aus einem Kunststoff besteht, der in Bezug auf das verwendete Laserlicht transparenter als der Mantel des Lichtwellenleiters ist, der ebenfalls aus einem Kunststoff besteht, mittels einer Laserverschweissung an der Berührungsfläche zwischen Ferrule und Lichtwellenleiter-Mantel, am Lichtwellenleiter befestigt.

Infolge der Transparenz dieser Ferrule kann im sogenannten Durchstrahlverfahren das Laserlicht die Ferrule nahezu vollständig durchdringen und im äussersten Bereich (radial gesehen) des Mantels des Lichtwellenleiters seine Wirkung entfalten.

Die wesentlichen Vorteile nach der vorliegenden Erfindung sind wie folgt:
- Hochfeste Verbindung zwischen Ferrule und Lichtwellenleiter;
- Die Ferrule kann kostengünstig in Spritzgusstechnik gefertigt werden;
- Wirtschaftliche Kabelkonfektionierung und Fertigung der Ferrule;
- Hoher Automatisierungsgrad bei der Montage möglich;
- Montage der Ferrule an dem Lichtwellenleiter kann mit der Bearbeitung der Stirnfläche des Lichtwellenleiters kombiniert werden; und
- Keine Beeinträchtigung der optischen Eigenschaften des Lichtwellenleiters.

Eine erfindungsgemäße Ferrule für einen Lichtwellenleiter und das erfindungsgemäße Verfahren zum Befestigen einer Ferrule an einem Lichtwellenleiter sind in den Zeichnungen dargestellt.

Diese zeigen in:
- Fig. 1: eine Querschnittansicht eines Lichtwellenleiters mit einer aufgesetzten Ferrule im Längsschnitt;
- Fig. 2: eine perspektivische Ansicht der Ferrule und eines Teils des Lichtwellenleiters nach der Figur 1;
- Fig. 3: eine Querschnittansicht des Lichtwellenleiters und der aufgesetzten Ferrule im Radialschnitt;
- Fig. 4: eine Querschnittansicht ähnlich der Figur 1, wobei jedoch eine Stirnfläche des Lichtwellenleiters bündig auf die Länge der Ferrule gekürzt ist; und
- Fig. 5: eine weitere perspektivische Ansicht der Ferrule und des Lichtwellenleiters nach der Figur 4.

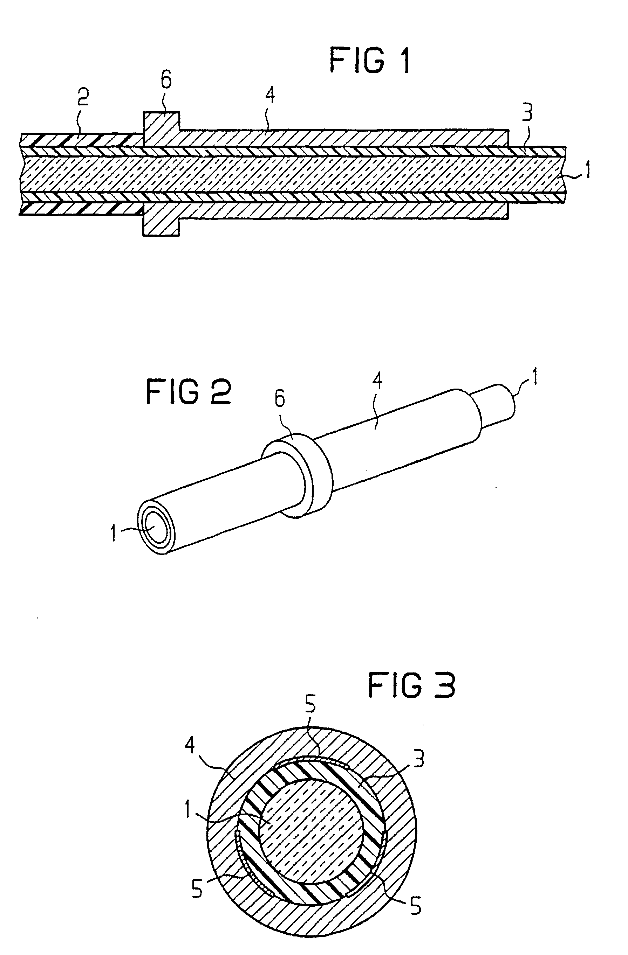

In der Figur 1 ist eine Ferrule 4 aus einem Kunststoffmaterial an einem Lichtwellenleiter 1 angeordnet, der ebenfalls aus einem Kunststoffmaterial gefertigt ist.

Der Lichtwellenleiter 1 weist in der dargestellten Ausführungsform einen lichtleitenden Kern sowie einen zweischaligen Mantel auf, der aus einem Außenmantel 2 und aus einem Innenmantel 3 besteht.

Dieser zweischalige bzw. zweischichtige Aufbau des Mantels des Lichtwellenleiters 1 aus Außenmantel 2 und Innenmantel 3 ist für die vorliegende Erfindung nicht zwingend erforderlich; ausschlaggebend ist, daß für die Anbringung der Ferrule 4 ein gewisser Puffer zur Verfügung steht, der bei der Befestigung der Ferrule 4 eine Beschädigung des Kerns des Lichtwellenleiters 1 verhindert.

Im Falle der in der Figur 1 gezeigten Ferrule 4 wird also zunächst der Außenmantel 2 des Lichtwellenleiters 1 in einem Bereich abisoliert, der etwa der axialen Länge der Ferrule 4 entspricht. Der abisolierte Bereich ist vorzugsweise geringfügig länger als die Ferrule 4, so daß ein kleines Stück des Lichtwellenleiters 1 über die Ferrule 4 übersteht. In der Figur 1 ist dieses überstehende Stück des Lichtwellenleiters 1 auf der rechten Seite der Zeichnung dargestellt.

Am linken Ende der Ferrule 4 ist ein Bund 6 ausgebildet. Dieser Bund 6 gelangt beim Aufschieben der Ferrule 4 auf den Lichtwellenleiter 1 in Anlage mit dem Außenmantel 2.

Somit ist der Kern des Lichtwellenleiters 1 bei aufgesetzter Ferrule 4 durch den Innenmantel 3 geschützt.

In der Figur 2 ist in einer perspektivischen Darstellung die auf den Lichtwellenleiter 1 aufgebrachte Ferrule 4 dargestellt. Der Lichtwellenleiter 1 steht hierbei rechts über die Ferrule 4 über, während auf der linken Seite der Darstellung der Lichtwellenleiter abgeschnitten dargestellt ist.

Mittels eines Laserlichtstrahls wird die Ferrule 4 an dem Lichtwellenleiter 1 befestigt. In der Figur 3 sind beispielhaft drei Bereiche 5 eingezeichnet, an denen die Schweißverbindung hergestellt ist. Je nach geforderten Festigkeiten der Verbindung zwischen Ferrule 4 und Lichtwellenleiter 1 können mehr oder weniger Bereiche 5 und auch die Erstreckung dieser Bereiche 5 variiert werden.

Der Lichtwellenleiter 1 und die Ferrule 4 werden mittels dieser Laserstrahlverschweißung dauerhaft und unlösbar miteinander verbunden. Die Verschweißung erfolgt dabei zwischen dem Innenumfang der Ferrule 4 und dem Außanumfang des Innenmantels 3.

Beim eigentlichen Verschweißen der Ferrule 4 mit dem Innenmantel 3 (Schutzmantel für den Kern des LWL) des Lichtwellenleiters 1 wird nur der Kunststoff an diesen beiden Teilen aufgeschmolzen, und es wird keine nennenswerte Beeinträchtigung an dem Lichcwellenleicer 1 bewirkt. Da die lichtleitende Faser nicht mechanisch verformt wird, wie etwa beim Crimpen, ist keine Erhöhung der optischen Dämpfung damit verbunden. Die Auszugskraft der Ferrule relativ zum Lichtwellenleicer 1 wird hauptsächlich durch die Güte des Scoffschlusses und durch den Querschnitt der Schweißnaht bestimmt.

Diese Schweißnaht kann mit einer beliebigen Anzahl von um die Ferrule 4 kreisförmig verteilten Lasern oder durch einen zentralen Laser erzeugt werden, der dann eine entsprechende Laseroptik speist.

Da die Ferrule 4 für das verwendete Laserlicht transparenter ist als der Innenmantel 3, kann im Durchstrahlverfahren geschweißt werden, d.h., daß der Laserlichtstrahl die transparente Ferrule 4 nahezu ungeschwächt durchdringt und seine Wirkung an dem Innenmantel 3 entfaltet. Dort wird er in der obersten Schicht des Innenmantels 3 absorbiert, wodurch das Material erwärmt wird, aufschmilzt und sich mit dem Material der Ferrule 4 verbindet.

Für dieses Durchscrahlverfahren muß der Laser eine Wellenlänge aufweisen, die vorzugsweise im sogenannten nahen Infrarotbereich liegt. Kunststoffe für die Ferrule 4 und den Innenmantel 3 des Lichtwellenleiters 1 sind verfügbar, die einerseits die Transparenz für die Ferrule 4 bieten und die andererseits als Innenmantel 3 das Licht gut absorbieren.

Die Innenfläche der Ferrule 4 kann eine glatte Oberfläche aufweisen oder kann auch nicht glatt ausgeführt sein, dann mit Vertiefungen, Aussparungen, Rippen, Stegen, etc., um das Verschweißen zu erleichtern. Insbesondere kleinere Materialmengen, wie zum Beispiel an einer Rippe, können mit dem Laser einfacher und schneller aufgeschmolzen werden, als eine volle glatte Fläche.

Ein schnelles Verschweißen bringt den Vorteil mit sich, daß eine Beschädigung des Kerns des Lichtwellenleiters 1 ausgeschlossen werden kann.

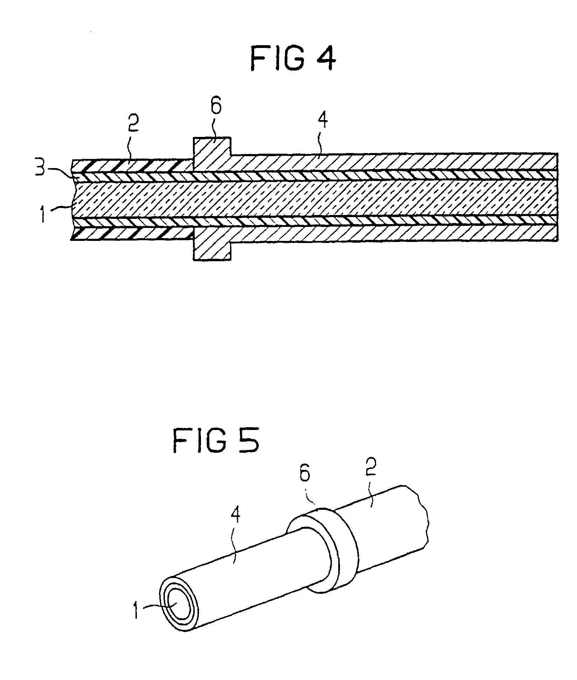

In den Figuren 4 und 5 ist das fertig bearbeitete Endstück des Lichtwellenleiters 1 mit Ferrule 4 dargestellt. Die Stirnfläche des Lichtwellenleiters 1 ist auf die Länge der Ferrule 4 gekürzt und endbearbeitet.

Die Stirnfläche kann abgeschnitten, geschliffen oder mit dem Laser geglättet sein. Im letzteren Fall kann der gleiche Laser wie für die Verschweißung eingesetzt werden.

Demnach zeichnet sich eine erfindungsgemäße Ferrule 4 für einen Lichtwellenleiter 1 dadurch aus, daß die Ferrule 4 aus Kunststoff hergestellt ist und daß die Ferrule 4 vorzugsweise transparenter als der Mantel 2, 3 des Lichtwellenleiters 1 ausgebildet ist. Ein erfindungsgemäßes Verfahren nach einer Ausführung zum Befestigen einer Ferrule 4 an einem Lichtwellenleiter 1 umfaßt die folgenden Schritte: Bereichsweises Abisolieren eines Außenmantels 2 eines Endes des Lichtwellenleiters 1 und Freilegen eines Innenmantels 3 des Lichtwellenleiters 1; Aufschieben der Ferrule 4 auf den abisolierten Bereich des Lichtwellenleiters 1; und zumindest bereichsweises Verschweißen der Ferrule 4 an der Berührungsfläche zum Innenmantel 3 des Lichtwellenleiters 1. Infolge der Transparenz dieser Ferrule 4 kann im sogenannten Durchstrahlverfahren das Laserlicht die Ferrule 4 nahezu vollständig durchdringen und im äußersten Bereich des Mantels 2, 3 des Lichtwellenleiters 1 seine Wirkung entfalten.

## Patentansprüche

1. Ferrule (4) mit einem Lichtwellenleiter (1), wobei die Ferrule (4) aus Kunststoff hergestellt ist und die Ferrule (4) an einem Mantel (2, 3) des Lichtwellenleiters (1) verschweissbar ist, **dadurch gekennzeichnet, dass** die Ferrule (4) mittels einer Laserverschweissung im Durchstrahlverfahren an dem Lichtwellenleiter (1) befestigbar ist und die Ferrule (4) für das verwendete Laserlicht transparenter ist als der Mantel (2, 3).

2. Ferrule (4) nach Anspruch 1,
**dadurch gekennzeichnet, dass** die Ferrule (4) im Wesentlichen eine hohlzylindrische Form aufweist, wobei der Lichtwellenleiter (1) durch den Hohlraum verläuft.

3. Ferrule (4) nach Anspruch 1 oder 2,
**dadurch gekennzeichnet, dass** die Ferrule (4) im Berührungsbereich mit dem Lichtwellenleiter (1) eine nicht glatte Oberfläche aufweist.

4. Ferrule (4) nach Anspruch 1 oder 2,
**dadurch gekennzeichnet, dass** die Ferrule (4) im Berührungsbereich mit dem Lichtwellenleiter (1) eine glatte Oberfläche aufweist.

5. Ferrule (4) nach einem der Ansprüche 1 bis 4,
**dadurch gekennzeichnet, dass** die Ferrule (4) mittels Spritzgiessen hergestellt ist.

6. Ferrule (4) nach einem der Ansprüche 1 bis 5,
**dadurch gekennzeichnet, dass** die Ferrule (4) am Ende, welches dem Ende des Lichtwellenleiters (1) gegenüberliegt, einen Bund (6) aufweist.

7. Ferrule (4) nach Anspruch 1,
**dadurch gekennzeichnet, dass** die Laserverschweissung zumindest bereichsweise im Berührungsbereich zwischen Ferrule (4) und Lichtwellenleiter (1) erfolgt.

8. Verfahren zum Befestigen einer Ferrule (4) an einem Lichtwellenleiter (1) mit folgenden Schritten:
- Axial bereichsweises Abisolieren eines Endes des Zylindrischen Lichtwellenleiters (1), wobei radial ein Teil eines Mantels (2, 3) des Lichtwellenleiters (1) entfernt wird;
- Aufschieben der Ferrule (4) auf den abisolierten Bereich des Lichtwellenleiters (1); und
- Zumindest bereichsweises (5) Verschweissen der Ferrule (4) an der Berührungsfläche zum verbliebenen Mantel (2, 3) des Lichtwellenleiters (1),
**gekennzeichnet durch** die Schritte:
Verschweissen der Ferrule (4) mit dem Lichtwellenleiter (1) mittels eines Laserstrahles; und
Verschweissen mittels eines Durchstrahlverfahrens, wobei die Ferrule (4) für das verwendete Laserlicht im Wesentlichen transparent ist und der Mantel (2, 3) des Lichtwellenleiters (1) das verwendete Laserlicht im Wesentlichen absorbiert.

9. Verfahren nach Anspruch 8,
**gekennzeichnet durch** den Schritt:
Herstellen der Ferrule (4) aus einem Kunststoff.

10. Verfahren nach Anspruch 8 oder 9,
**gekennzeichnet durch** den Schritt:
Herstellen der Ferrule (4) mittels eines Spritzgussverfahrens.

11. Verfahren nach einem der Ansprüche 8 bis 10,
**gekennzeichnet durch** den Schritt:
Herstellen des Lichtwellenleiters (4) aus einem Kunststoff.

12. Verfahren nach einem der Ansprüche 8 bis 11,
**gekennzeichnet durch** den Schritt:
Herstellen des Mantels (2, 3), der aus einem Aussenmantel (2) und/oder einem Innenmantel (3) besteht, aus einem Kunststoff.

13. Verfahren nach Anspruch 8,
**gekennzeichnet durch** den Schritt:
Verwenden eines Lasers mit einer Wellenlänge des Laserlichtes im nahen Infrarotbereich.

14. verfahren nach einem der Ansprüche 8 bis 12,
**gekennzeichnet durch** den Schritt:
Verwenden eines CO₂-Lasers.

15. Verfahren nach einem der Ansprüche 8 bis 14,
**gekennzeichnet durch** den Schritt:
Anordnen von mehreren, am Umfang der Ferrule (4) kreisförmig angebrachten Lasern.

16. Verfahren nach einem der Ansprüche 8 bis 14,
**gekennzeichnet durch** den Schritt:
Anordnen eines Lasers und Anordnen einer Laseroptik zum Verteilen des Laserlichtes des Lasers über den umfang der Ferrule (4).

## Claims

1. A ferrule (4) having an optical waveguide (1), in which the ferrule (4) is made from synthetic material and the ferrule (4) may be welded to a casing (2, 3) of the optical waveguide (1), **characterised in that** the ferrule (4) may be secured to the optical waveguide (1) by means of laser welding using the transmission method, and the ferrule (4) is more transparent with respect to the laser light used than the casing (2, 3).

2. A ferrule (4) according to Claim 1, **characterised in that** the ferrule (4) has substantially a hollow cylindrical shape, with the optical waveguide (1) extending through the hollow space.

3. A ferrule (4) according to Claim 1 or 2, **characterised in that** in the region of contact with the optical waveguide (1) the ferrule (4) has a surface which is not smooth.

4. A ferrule (4) according to Claim 1 or 2, **characterised in that** in the region of contact with the optical waveguide (1) the ferrule (4) has a surface which is smooth.

5. A ferrule (4) according to one of Claims 1 to 4, **characterised in that** the ferrule (4) is made by means of injection moulding.

6. A ferrule (4) according to one of Claims 1 to 5, **characterised in that** the ferrule (4) has a collar (6) at the end opposite the end with the optical waveguide (1).

7. A ferrule (4) according to Claim 1, **characterised in that** the laser welding is performed at least in certain regions of the region of contact between the ferrule (4) and the optical waveguide (1).

8. A method of securing a ferrule (4) to an optical waveguide (1), having the following steps:
- stripping certain axial regions of an end of the cylindrical optical waveguide (1), during which part of a casing (2, 3) of the optical waveguide (1) is radially removed;
- pushing the ferrule (4) onto the stripped region of the optical waveguide (1); and
- welding the ferrule (4), at least in certain regions (5), onto the remaining casing (2, 3) of the optical waveguide (1) at the contact surface,
**characterised by** the steps of:
- welding the ferrule (4) to the optical waveguide (1) by means of a laser beam; and
- welding by means of a transmission method, in which the ferrule (4) is substantially transparent with respect to the laser light used and the casing (2, 3) of the optical waveguide (1) substantially absorbs the laser light used.

9. A method according to Claim 8, **characterised by** the step of:
making the ferrule (4) from a synthetic material.

10. A method according to Claim 8 or 9, **characterised by** the step of:
making the ferrule (4) by means of an injection moulding method.

11. A method according to one of Claims 8 to 10, **characterised by** the step of:
making the optical waveguide (4) from a synthetic material.

12. A method according to one of Claims 8 to 11, **characterised by** the step of:
making the casing (2, 3), which comprises an outer casing (2) and/or an inner casing (3), from a synthetic material.

13. A method according to Claim 8, **characterised by** the step of:
using a laser having a wavelength of laser light in the near infrared range.

14. A method according to one of Claims 8 to 12, **characterised by** the step of:
using a CO₂ laser.

15. A method according to one of Claims 8 to 14, **characterised by** the step of:
providing a plurality of lasers positioned in a circle on the periphery of the ferrule (4).

16. A method according to one of Claims 8 to 14, **characterised by** the step of:
providing a laser and providing laser optics in order to distribute the laser light of the laser over the periphery of the ferrule (4).

## Revendications

1. Ferrule (4) comportant un guide d'ondes optiques (1), la ferrule (4) étant composée en matière plastique et la ferrule (4) pouvant être soudée sur une enveloppe (2, 3) du guide d'ondes optiques (1), **caractérisée en ce que** la ferrule (4) peut être fixée par soudage au laser par un procédé de traversée sur le guide d'ondes optiques (1) et **en ce que** la ferrule (4) est plus transparente à la lumière laser utilisée que l'enveloppe (2, 3).

2. Ferrule (4) selon la revendication 1, **caractérisée en ce que** la ferrule (4) a pour l'essentiel la forme d'un cylindre creux, le guide d'ondes optiques (1) s'étendant à travers l'espace creux.

3. Ferrule (4) selon les revendications 1 ou 2, **caractérisée en ce que** la ferrule (4) comporte une surface non lisse dans la zone en contact avec le guide d'ondes optiques (1).

4. Ferrule (4) selon les revendications 1 ou 2, **caractérisée en ce que** la ferrule (4) comporte une surface lisse dans la zone en contact avec le guide d'ondes optiques (1).

5. Ferrule (4) selon l'une des revendications 1 à 4, **caractérisée en ce que** la ferrule (4) est fabriquée par moulage par injection.

6. Ferrule (4) selon l'une des revendications 1 à 5, **caractérisée en ce que** la ferrule (4) comporte un épaulement (6) au niveau de l'extrémité opposée à l'extrémité du guide d'ondes optiques (1).

7. Ferrule (4) selon la revendication 1, **caractérisé en ce que** le soudage au laser est effectué au moins partiellement dans la zone de contact entre la ferrule (4) et le guide d'ondes optiques (1).

8. Procédé de fixation d'une ferrule (4) sur un guide d'ondes optiques (1), le procédé comportant les étapes ci-dessous:
- dénudation axiale partielle d'une extrémité du guide d'ondes optiques cylindrique (1) avec élimination radiale d'une partie d'une enveloppe (2, 3) du guide d'ondes optiques (1);
- application de la ferrule (4) sur la zone dénudée du guide d'ondes optiques (1); et
- soudage au moins partiel (5) de la ferrule (4) sur la surface en contact avec l'enveloppe restante (2, 3) du guide d'ondes optiques,
**caractérisé par** les étapes ci-dessous:
- soudage de la ferrule (4) avec le guide d'ondes optiques (1) par l'intermédiaire d'un faisceau laser; et
- soudage par l'intermédiaire d'un procédé de traversée, la ferrule (4) étant pour l'essentiel transparente à la lumière laser utilisée et l'enveloppe (2, 3) du guide d'ondes optiques (1) absorbant pour l'essentiel la lumière laser utilisée.

9. Procédé selon la revendication 8, **caractérisé par** l'étape ci-dessous:
fabrication de la ferrule (4) à partir d'une matière plastique.

10. Procédé selon les revendications 8 ou 9, **caractérisé par** l'étape ci-dessous:
fabrication de la ferrule (4) par l'intermédiaire d'un procédé de moulage par injection.

11. Procédé selon l'une des revendications 8 à 10, **caractérisé par** l'étape ci-dessous:
fabrication du guide d'ondes optiques (4) à partir d'une matière plastique.

12. Procédé selon l'une des revendications 8 à 11 **caractérisé par** l'étape ci-dessous:
fabrication de l'enveloppe (2, 3), composée d'une enveloppe externe (2) et/ou d'une enveloppe interne (3) à partir d'une matière plastique.

13. Procédé selon la revendication 8, **caractérisé par** l'étape ci-dessous:
utilisation d'un laser ayant une longueur d'onde de la lumière laser située dans la région des infrarouges proches.

14. Procédé selon l'une des revendications 8 à 12, **caractérisé par** l'étape ci-dessous:
utilisation d'un laser CO₂.

15. Procédé selon l'une des revendications 8 à 14, **caractérisé par** l'étape ci-dessous:
agencement de plusieurs lasers positionnés en forme de cercle sur la circonférence de la ferrule (4).

16. Procédé selon l'une des revendications 8 à 14, **caractérisé par** l'étape ci-dessous:
agencement d'un laser et agencement d'un dispositif optique à laser en vue de la réparation de la lumière laser sur la circonférence de la ferrule (4).
